Europäisches Patentamt

European Patent Office

Office européen des brevets

(11) Veröffentlichungsnummer: **0 341 572 B1**

(19)

(12) **EUROPÄISCHE PATENTSCHRIFT**

(45) Veröffentlichungstag der Patentschrift: **30.12.92**

(51) Int. Cl.⁵: **B01D 53/14**

(21) Anmeldenummer: **89108037.6**

(22) Anmeldetag: **03.05.89**

(54) Verfahren zur Regenerierung eines mit H2S und/oder COS beladenen Waschmittels.

(30) Priorität: **09.05.88 DE 3815867**

(43) Veröffentlichungstag der Anmeldung:
**15.11.89 Patentblatt 89/46**

(45) Bekanntmachung des Hinweises auf die
Patenterteilung:
**30.12.92 Patentblatt 92/53**

(84) Benannte Vertragsstaaten:
**DE NL SE**

(56) Entgegenhaltungen:
**GB-A- 2 132 630**
**US-A- 2 975 026**
**US-A- 3 831 348**

(73) Patentinhaber: **Linde Aktiengesellschaft**
**Abraham-Lincoln-Strasse 21**
**W-6200 Wiesbaden(DE)**

(72) Erfinder: **Ranke, Gerhard, Dipl.-Ing.**
**Feichtetstrasse 6**
**W-8134 Pöcking(DE)**
Erfinder: **Weber, Günter, Dr., Dipl.-Chem.**
**Adalbert-Stifter-Strasse 11**
**W-8226 Altenmarkt(DE)**

(74) Vertreter: **Schaefer, Gerhard, Dr.**
**Linde Aktiengesellschaft Zentrale Patentab-**
**teilung**
**W-8023 Höllriegelskreuth(DE)**

**Beschreibung**

Die Erfindung betrifft ein Verfahren zur Regenerierung eines mit $H_2S$ und/oder COS sowie gegebenenfalls anderen zu gewinnenden Rohgaskomponenten beladenen Waschmittels, wobei das beladene Waschmittel mit einem oxidativ wirkenden, mit dem Waschmittel nicht mischbaren Lösungsmittel versetzt und das darin gelöste $H_2S$ oxidativ zu elementarem Schwefel umgesetzt wird.

Bisher ist es üblich, für die Entfernung von $H_2S$ aus Druckgasen zunächst das $H_2S$ mittels physikalisch oder chemisch wirkenden Wäschen aus dem Gas auszuwaschen, das gelöste $H_2S$ aus dem Waschmittel auszutreiben, d.h. das Waschmittel zu regenerieren, um anschließend das gasförmige $H_2S$ zu elementarem Schwefel oder Schwefelsäure aufzuarbeiten.

Derartige Verfahren zur Regenerierung beladener Absorptionslösungen sind beispielsweise aus Ullmanns Enzyklopädie der Technischen Chemie, 4. Auflage, Band 2, Seiten 586 bis 589, bekannt.

Dabei wird bei physikalischen und physikalisch-chemischen Druckwäschen das beladene Waschmittel in der Regel durch Entspannung des Waschmittels regeneriert. Bei hohen Reinheitsanforderungen an das auszuwaschende Gas oder bei chemischen Wäschen wird dagegen das Strippen des beladenen Waschmittels mit Dampf des Lösungsmittels, mit Wasserdampf oder mit einem Inertgas erforderlich.

Eine weitere Art der Regenerierung ergibt sich bei oxidativen Schwefelwasserstoffwäschen, da dort Schwefelwasserstoff unter Reduktion der chemisch bindenden Komponente des Waschmittels absorbiert und in elementaren Schwefel umgesetzt wird. Die beladene Waschlösung wird anschließend durch Begasen mit Sauerstoff oder Luft regeneriert.

Die bei der Regenerierung durch Entspannen oder Strippen anfallende Sauergasfraktion wird normalerweise in Claus-Anlagen oder mittels oxidativer Wäschen weiterverarbeitet. Während für Claus-Anlagen ein relativ hoher $H_2S$-Gehalt erforderlich ist, können bei den oxidativen Wäschen Gase mit niedrigem $H_2S$-Gehalt verarbeitet werden. Es hat sich gezeigt, daß speziell bei kleinen Schwefelmengen die nach den Claus-Anlagen ohnehin notwendige Nachreinigung sehr unwirtschaftlich ist.

Prinzipiell ist es möglich, oxidative Schwefelwasserstoffwäschen zur Entschwefelung eines Rohgases ohne Zwischenschaltung einer weiteren Sauergaswäsche einzusetzen, allerdings ist aufgrund der sehr geringen $H_2S$-Aufnahme der Waschlauge das Arbeiten bei höheren Rohgasdrücken wegen der stark ansteigenden Pumpenenergie nicht sinnvoll.

Bisher wurden oxidative Schwefelwasserstoffwäschen lediglich zur Entschwefelung von nahezu drucklosem Koksofengas oder von schwach schwefelhaltigen Sauergasen, beispielsweise aus einer Methanol-Wäsche, durchgeführt.

Somit ist die Regenerierung von beladenen physikalischen oder chemischen Waschmitteln von großer Bedeutung, da für die physikalischen und chemischen Wäschen der Wärmebedarf für die Regenerierung des beladenen Waschmittels der größte Einzelposten bei den Verbrauchszahlen ist. Eine Regenerierung mit einem Inertgas, wie sie bei $CO_2$-Wäschen gelegentlich angewendet wird, ist bei $H_2S$-Wäschen nicht sinnvoll, da dadurch die Gasmenge, die der Schwefelgewinnungsanlage zugeführt wird, zu stark vergrößert wird bei gleichzeitiger Reduzierung der $H_2S$-Konzentration. Aus diesem Grund wird das gelöste $H_2S$ im allgemeinen (ebenso wie die anderen gelösten Gase, wie z.B. $CO_2$) mit verdampfendem Waschmittel ausgetrieben. Falls die Waschmittel Wasser enthalten, liegen die Regeneriertemperaturen zwischen 105 und 130°C.

Nachteilig auf die Regenerierung wirkt sich aus, daß bestimmte Waschmittel, wie z.B. Aromaten oder zyklische Kohlenwasserstoffverbindungen, nicht mit Wasser mischbar sind und somit nicht mit Wasserdampf regeneriert werden können. Daher sind in diesem Fall wesentlich höhere Regeneriertemperaturen und damit teurer Dampf für die Regenerierung notwendig.

Aus vorstehend genannten Gründen wird deutlich, daß die bekannten Regenerierverfahren wie z.B. Strippen mit einem erheblichen Energieaufwand verbunden sind, wozu bei Druckwäschen noch der Stromverbrauch für die Waschmittelpumpen hinzukommt und auf diese Weise die Regenerierung einen wesentlichen Teil der Betriebskosten der Entschwefelung ausmacht.

Aus der US-A-2,975,026 ist ein Verfahren zur Regenerierung eines mit $H_2S$ beladenen Waschmittels bekannt, wobei ein mit dem Waschmittel nicht mischbares und mit allen Bestandteilen des Waschmittels in frischem Zustand nicht reaktives Lösungsmittel mit dem Waschmittel in Kontakt gebracht wird. Das verwendete Waschmittel besteht aus einer wäßrigen Lösung. Das Lösungsmittel enthält als eine $H_2S$ reduzierende Verbindung einen organischen Farbstoff oder eine organische Farbstoffbasis. Der organische Farbstoff bzw. die Farbstoffbasis reagiert mit dem $H_2S$ des beladenen Waschmittels unter Bildung eines im Lösungsmittel verbleibenden Reduktionsproduktes und gelösten Schwefels. Das beladene Waschmittel wird vor der Zugabe des Lösungsmittels erwärmt. Nach Abtrennung des Lösungsmittels vom Waschmittel wird das Lösungsmittel gekühlt, um die Abtrennung des Schwefels durch Kristallisation zu erreichen. Das Lösungsmittel wird nach Abtrennung des Schwefels mit Luft oder Sauerstoff kontaktiert, um das Reduktionsprodukt im Lösungsmittel zu oxidieren und somit das Lösungsmittel zu regenerieren.

Es ist Aufgabe der vorliegenden Erfindung, ein Verfahren zur Verfügung zu stellen, mit dem eine einfache, energetisch günstige und kosteneffektive Regenerierung eines mit $H_2S$ und/oder COS beladenen Waschmittels ermöglicht wird.

Diese Aufgabe wird erfindungsgemäß dadurch gelöst, daß ein physikalisch wirkendes, nicht mit Wasser mischbares Waschmittel und ein wäßriges Lösungsmittel verwendet werden.

Es wurde gefunden, daß die aus einer oxidativen Wäsche bekannte Reaktion zur Umsetzung von $H_2S$ zu elementarem Schwefel nicht auf gasförmiges $H_2S$ beschränkt ist, sondern daß die Reaktion auch stattfindet, wenn das $H_2S$ in einem anderen Waschmittel gelöst ist.

Es ist somit möglich, anstelle der Regenerierung eines mit $H_2S$ und/oder COS beladenen Waschmittels mittels Strippgas oder Anwärmung und teilweiser Verdampfung des Waschmittels und Gewinnung einer gasförmigen $H_2S$-Fraktion das gelöste $H_2S$ sofort - in vorteilhafter Weise ohne vorherige Anwärmung - mit einem oxidativ wirkenden Lösungsmittel in elementaren Schwefel umzusetzen und auf diesem Weg ein $H_2S$-freies Waschmittel für die erneute $H_2S$-Auswaschung aus dem Rohgas zu gewinnen.

Wichtig ist dabei, daß das für die Entschwefelung verwendete Waschmittel nicht mit dem oxidativ wirkenden Lösungsmittel mischbar sein darf, damit eine einfache Trennung der beiden Flüssigkeiten gewährleistet ist.

Als Waschmittel für die Entschwefelung werden erfindungsgemäß physikalische Waschmittel eingesetzt, mit Vorteil ringförmige Kohlenwasserstoffverbindungen oder N- und/oder O-haltige Kohlenwasserstoffverbindungen, für die gefunden wurde, daß sie für die $H_2S$-Auswaschung aus $CO_2$-reichen Rohgasen besonders geeignet sind. Zudem gehören diese Waschmittel zur Gruppe der nicht mit Wasser mischbaren Waschmittel, so daß in diesem Fall die Anwendung des erfindungsgemäßen Regenerierverfahrens zu einer erheblichen Energie- und Kosteneinsparung führt.

Um möglichst reinen Schwefel zu gewinnen und die Lösungsmittelverluste möglichst gering zu halten, wird zweckmäßigerweise ein ein wäßriges, alkalisches, fünfwertiges Vanadin als Oxidationsmittel sowie einen Promotor enthaltendes Lösungsmittel verwendet und als Promotor eine organische Stickstoffverbindung z.B. ein Amin bzw. die sich während des Regenerierverfahrens aus den Substanzen bildenden Verbindungen zugesetzt.

Mit Vorteil wird dabei als stickstoffhaltiger Promotor eine Verbindung aus der Gruppe der Alkylamine, Alkanolamine, zyklischen Sticktstoffverbindungen, Aminocarbonsäuren, Aminosulfonsäuren oder Aminoschwefelsäuren verwendet. Als Alkylamin kann ein Mono- oder Polyamin, bevorzugt Diethylenamin, Butylamin, Triethylentetramin, Hexamethylendiamin oder N, N'- bis- (3 Aminopropyl)-Ethylendiamin verwendet werden. Als infragekommendes Alkanolamin kann Mono- Di- oder Triethanolamin, Dimethylethanolamin, Methyldiethanolamin oder Methylaminoethanol verwendet werden. Als zyklische Stickstoffverbindung eignet sich besonders Piperidin. Ebensogut können weitere Verbindungen aus den genannten Substanzklassen verwendet werden, wie z.B. Tetrapropylenpentamin, Tetraethylenpentamin, Triethylentetramin, Tripropylentetramin, 3,2-Aminoethyl -Aminopropylenamin.

Die erfindungsgemäß einzusetzenden Promotoren haben den Vorteil, daß sie die Rückoxidation des vierwertigen Vanadin beschleunigen, sowie reduziertes Vanadin in Lösung halten. Die Rückoxidation des reduzierten Vanadin erfolgt häufig sehr schnell, wodurch sich kleine Behälter und geringe Lösungsmittelmengen und damit Kosteneinsparungen ergeben. Weiterhin entfällt der Zusatz eines Komplexbildners für Vanadin, wie Zitronen- oder Weinsäure, was sich ebenfalls in einer Kosteneinsparung äußert.

In Weiterbildung des Erfindungsgedankens ist vorgesehen, daß der Promotor in einer Konzentration von 10 bis 100 g/l, vorzugsweise 30 bis 50 g/l verwendet wird. Diese angegebenen Werte hängen stark von dem verwendeten Promotor sowie von der Vanadin-Konzentration ab. Es muß demnach für jeden Promotor speziell ein geeigneter Konzentrationsbereich gefunden werden, der im allgemeinen jedoch in den angegebenen Grenzen liegt. Insbesondere die untere Bereichsgrenze ist als gültig anzusehen, da bei geringeren Zugabemengen die Sauerstoffaktivierungswirkung des Promotors nicht mehr gegeben wäre. Die obere Bereichsgrenze dagegen kann bei entsprechendem Promotor auch überschritten werden.

Mit besonderem Vorzug kommt zur Regenerierung ein Lösungsmittel mit den Komponenten $Na_2CO_3$, Vanadin, NaSCN und Promotor zum Einsatz. Dabei richtet sich der Vanadinanteil nach der Höhe der gelösten $H_2S$-Menge im Waschmittel.

Gemäß einer bevorzugten Ausführungsform des erfindungsgemäßen Verfahrens wird der elementare Schwefel aus einem Extraktionsbehälter als Feststoff abgezogen und zu flüssigem Schwefel aufgearbeitet.

Besonders bei $CO_2$-reichen Rohgasen ist es günstig, das beladene Waschmittel vor der Regenerierung vom Rohgasdruck auf den Druck des Extraktionsbehälters zu entspannen. Dabei fällt bereits eine gasförmige Fraktion an, die außer $CO_2$ noch weitere koabsorbierte Gase wie auch geringe Mengen an $H_2S$ und/oder

COS enthält, denn sollte in der Rohgaswäsche auch COS ausgewaschen worden sein, so wird dieses bei der Druckabsenkung teilweise frei. So wird diese Fraktion erfindungsgemäß in bevorzugter Weise einer oxidativen $H_2S$-Wäsche zugeführt und dabei anfallendes Waschmittel zusammen mit der flüssigen Fraktion der Extraktionsstufe aufgearbeitet.

Enthält die gasförmige Fraktion auch COS, so ist erfindungsgemäß vorgesehen, daß die Fraktion nach der $H_2S$-Wäsche einer katalytischen Hydrierung zur Umwandlung des COS in $H_2S$ unterworfen und dieses dann einer oxidativen $H_2S$-Wäsche zugeführt wird.

Es kann auch von Vorteil sein, diese Art der Waschmittelregenerierung mit der Gewinnung von anderen Rohstoffen aus dem Rohgas zu koppeln. So wird erfindungsgemäß vorgeschlagen, das Waschmittel nach der Schwefelabtrennung einer $C_{3+}$-Gewinnung zuzuführen (wobei $C_{3+}$ bedeutet eine Kohlenwasserstoff-Verbindung mit drei oder mehr Kohlenstoffatomen), dieses ist besonders günstig im Falle der Erdgasentschwefelung mit Aromaten. Da sich $H_2S$ und z.B. $C_3H_8$ durch Rektifikation nicht vollständig trennen lassen, werden $H_2S$ und $C_{3+}$ Kohlenwasserstoffe zusammen aus dem Rohgas ausgewaschen, das im Waschmittel gelöste $H_2S$ mit dem oxidativen Lösungsmittel extrahiert und das somit schwefelfreie Waschmittel anschließend einer $C_{3+}$-Gewinnung zugeführt.

Diese Art der Entschwefelung von Rohgasen, wie beispielsweise Erdgasen, Gasen aus der Kohlevergasung oder aus Raffinerieprozessen, mit erfindungsgemäßer gekoppelter Gewinnung von elementarem Schwefel eignet sich besonders für Gase mit nicht zu hohem $H_2S$-Gehalt und gleichzeitig hohem Rohgasdruck.

Da bei der erfindungsgemäßen Regenerierung des beladenen Waschmittels nur $H_2S$ umgesetzt wird, sind die Zusammensetzung des Rohgases und die zusätzlich zum $H_2S$ ausgewaschenen Bestandteile des Rohgases für die $H_2S$-Umsetzung belanglos, solange nicht im Rohgas Bestandteile enthalten sind, die bei der oxidativen Wäsche unerwünschte Nebenreaktionen verursachen. Somit ist das erfindungsgemäße Verfahren auch bevorzugt anwendbar zur Regenerierung von beladenem Waschmittel aus einer Wäsche mit einem ungünstigen $CO_2/H_2S$-Verhältnis.

Grundsätzlich ist das erfindungsgemäße Verfahren zur Regenerierung beladener Waschmittel geeignet, solange sie nicht mit dem oxidativ wirkenden Lösungsmittel mischbar sind.

Das erfindungsgemäße Verfahren hat dabei den Vorteil, daß für die Regenerierung kein zusätzlicher Wärmebedarf und keine aufwendigen Regenerierkolonnen notwendig sind, womit Investitions- und Betriebskosten insgesamt günstig beeinflußt werden.

Nachfolgend sei das erfindungsgemäße Verfahren anhand eines schematischen Ausführungsbeispieles, welches als Blockschema ausgeführt ist, näher erläutert.

Über Leitung 1 werden 100.000 $Nm^3$/h eines Rohgases bei einem Druck von 70 bar einer Waschsäule 2 zugeführt. Dabei hat das Rohgas folgende Zusammensetzung:

| | |
|---|---|
| $CH_4$ | 80,9 mol% |
| $C_2H_6$ | 10 mol% |
| $C_{3+}$ | 3 mol% |
| $CO_2$ | 6 mol% |
| $H_2S$ | 0,1 mol% |

In der Waschsäule 2 werden $C_{3+}$ und $H_2S$ mit Tetralin als Waschmittel aus dem Rohgas ausgewaschen. Da das Waschmittel sehr selektiv bezüglich $H_2S$ und $C_{3+}$ ist, wird nur relativ wenig $CO_2$, $CH_4$ und $C_2H_6$ mitausgewaschen. Das gewaschene Gas wird über Leitung 3 als Produkt mit einem $H_2S$-Gehalt von 4 ppm abgegeben.

Das beladene Waschmittel wird zunächst via Leitung 4 einem Entspannungsbehälter 5 zugeführt und auf einen Zwischendruck entspannt. Die dabei freigesetzten Gase - bevorzugt $CH_4$, $C_2H_6$ und $CO_2$ - werden auf den Rohgasdruck verdichtet (Leitung 6, Verdichter 7) und dem Rohgas (Leitung 1) vor der Wäsche zugemischt.

Das teilentspannte Waschmittel, welches praktisch noch sämtliches $H_2S$ und $C_{3+}$ im gelösten Zustand enthält, wird anschließend mit einem oxidativen Lösungsmittel, das mit Tetralin nicht mischbar ist und über Leitung 10 zugeführt wird, extrahiert (8,9). Dabei reagiert das gelöste $H_2S$ mit dem Lösungsmittel unter Bildung von elementarem Schwefel. Über Leitung 11 wird das schwefelhaltige Lösungsmittel einer Regenerierung 12 durch Begasen mit Luft (Leitung 13) bei gleichzeitiger Abtrennung des gebildeten festen Schwefels (Leitung 14) zugeführt. Mittels Leitung 15 wird bei der Regenerierung entstehende Abluft entfernt.

Das $H_2S$-freie Waschmittel aus der Extraktionsstufe 9 wird via Leitung 16 einer $C_{3+}$-Gewinnungsstufe

17 zugeführt, wo die noch im Waschmittel gelösten $C_{3+}$-Kohlenwasserstoffe abgetrieben und über Leitung 18 als Produkt abgegeben werden. Das nunmehr vollständig regenerierte Waschmittel gelangt über Leitung 19 erneut in die Waschsäule 2.

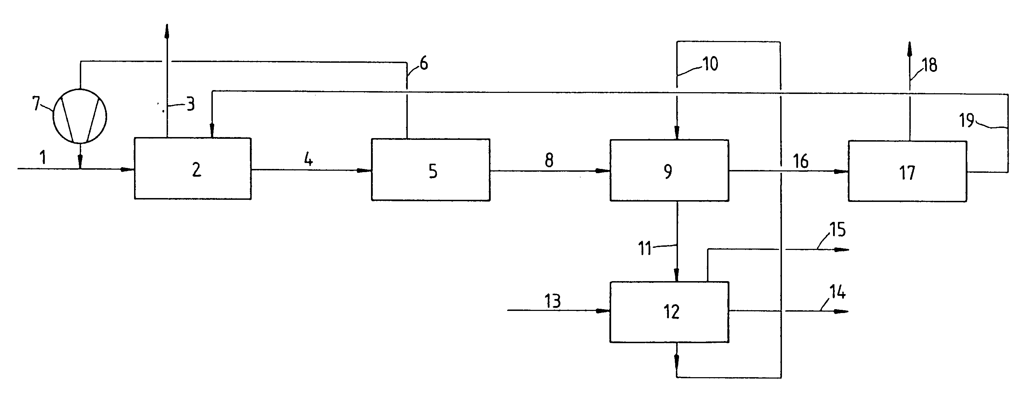

**Patentansprüche**

1. Verfahren zur Regenerierung eines mit $H_2S$ und/oder COS beladenen Waschmittels, wobei das beladene Waschmittel mit einem oxidativ wirkenden, mit dem Waschmittel nicht mischbaren Lösungsmittel versetzt und das darin gelöste $H_2S$ oxidativ zu elementarem Schwefel umgesetzt wird, **dadurch gekennzeichnet,** daß ein physikalisch wirkendes, nicht mit Wasser mischbares Waschmittel und ein wäßriges Lösungsmittel verwendet werden.

2. Verfahren nach Anspruch 1, dadurch gekennzeichnet, daß als Waschmittel Kohlenwasserstoffverbindungen verwendet werden.

3. Verfahren nach Anspruch 2, dadurch gekennzeichnet, daß als Waschmittel ringförmige Kohlenwasserstoffverbindungen verwendet werden.

4. Verfahren nach Anspruch 3, dadurch gekennzeichnet, daß als Waschmittel N- und/oder O-haltige Kohlenwasserstoffverbindungen verwendet werden.

5. Verfahren nach einem der Ansprüche 1 bis 4, dadurch gekennzeichnet, daß ein ein wäßriges, alkalisches, fünfwertiges Vanadin als Oxidationsmittel sowie einen Promotor enthaltendes Lösungsmittel verwendet wird.

6. Verfahren nach Anspruch 5, dadurch gekennzeichnet, daß als Promotor eine organische Stickstoffverbindung z.B. ein Amin bzw. die sich während des Regenerierverfahrens aus den Substanzen bildenden Verbindungen zugesetzt werden.

7. Verfahren nach Anspruch 6, dadurch gekennzeichnet, daß als stickstoffhaltiger Promotor eine Verbindung aus der Gruppe der Alkylamine, Alkanolamine, zyklischen Stickstoffverbindungen, Aminocarbonsäuren, Aminosulfonsäuren oder Aminoschwefelsäuren verwendet wird.

8. Verfahren nach Anspruch 7, dadurch gekennzeichnet, daß als Alkanolamin Mono-, Di- oder Triethanolamin, Dimethylethanolamin, Methyldiethanolamin oder Methylaminoethanol verwendet wird.

9. Verfahren nach einem der Ansprüche 7 bis 8, dadurch gekennzeichnet, daß der Promotor in einer Konzentration von 10 bis 100 g/l, vorzugsweise 30 bis 50 g/l zugesetzt wird.

10. Verfahren nach Anspruch 1, dadurch gekennzeichnet, daß der elementare Schwefel aus einem Extraktionsbehälter als Feststoff abgezogen wird.

11. Verfahren nach Anspruch 10, dadurch gekennzeichnet, daß der als Feststoff abgezogene Schwefel zu flüssigem Schwefel aufgearbeitet wird.

12. Verfahren nach einem der Ansprüche 1 bis 5 dadurch gekennzeichnet, daß das beladene Waschmittel vor der Regenerierung von Rohgasdruck auf den Druck des Extraktionsbehälters entspannt wird.

13. Verfahren nach Anspruch 12, dadurch gekennzeichnet, daß die bei der Entspannung anfallende $H_2S$ und/oder COS-haltige Gasfraktion einer oxidativen $H_2S$-Wäsche zugeführt und dabei anfallendes beladenes Waschmittel zusammen mit der flüssigen Fraktion der Extraktionsstufe aufgearbeitet wird.

14. Verfahren nach Anspruch 13, dadurch gekennzeichnt, daß die Gasfraktion nach der $H_2S$-Wäsche einer katalytischen Hydrierung unterworfen wird, um noch vorhandenes COS in $H_2S$ umzusetzen und dieses dann einer der oxidativen $H_2S$-Wäsche zuzuführen.

15. Verfahren nach einem der Ansprüche 1 bis 14, dadurch gekennzeichnet, daß das Waschmittel nach der Schwefelabtrennung einer $C_{3+}$-Gewinnung zugeführt wird.

**Claims**

1. A process for regenerating a scrubbing agent, charged with $H_2S$ and/or COS, wherein the charged scrubbing agent is mixed with an oxidatively active solvent which cannot be mixed with the scrubbing agent, and the $H_2S$ dissolved therein is oxidatively converted into elemental sulphur, characterised in that a physically active scrubbing agent, which cannot be mixed with water, and an aqueous solvent are used.

2. A process as claimed in Claim 1, characterised in that hydrocarbon compounds are used as scrubbing agent.

3. A process as claimed in Claim 2, characterised in that ring-shaped hydrocarbon compounds are used as scrubbing agent.

4. A process as claimed in Claim 3, characterised in that hydrocarbon compounds containing N and/or O are used as scrubbing agent.

5. A process as claimed in one of Claims 1 to 4, characterised in that a solvent is used which contains an aqueous, alkaline, pentavalent vanadium as oxidizing agent and a promoter.

6. A process as claimed in Claim 5, characterised in that an organic nitrogen compound, e.g. an amine or compounds which form from the substances during the regeneration process are added as promoter.

7. A process as claimed in Claim 6, characterised in that a compound from the group comprising the alkylamines, alkanolamines, cyclic nitrogen compounds, aminocarboxylic acids, aminosulphonic acids or aminosulphuric acids is used as promoter containing nitrogen.

8. A process as claimed in Claim 7, characterised in that mono-, di- or triethanolamine, dimethylethanolamine, methyldiethanolamine or methylaminoethanol is used as alkanolamine.

9. A process as claimed in one of Claims 7 to 8, characterised in that the promoter is added in a concentration of 10 to 100 g/l, preferably 30 to 50 g/l.

10. A process as claimed in Claim 1, characterised in that the elemental sulphur is extracted from an extraction container as solid material.

11. A process as claimed in Claim 10, characterised in that the sulphur extracted as solid material is processed into liquid sulphur.

12. A process as claimed in one of Claims 1 to 5, characterised in that prior to the regeneration, the charged scrubbing agent is expanded from the crude gas pressure to the pressure of the extraction container.

13. A process as claimed in Claim 12, characterised in that the $H_2S$ and/or the gaseous fraction containing COS which is produced by the expansion is fed to an oxidative $H_2S$ scrubbing stage and charged scrubbing agent which is thereby produced is processed together with the liquid fraction from the extraction stage.

14. A process as claimed in Claim 13, characterised in that following the $H_2S$ scrubbing stage, the gas fraction is subjected to catalytic hydrogenation in order to convert any COS which is still present into $H_2S$ and then to conduct the latter to an oxidative $H_2S$ scrubbing stage.

15. A process as claimed in one of Claims 1 to 14, characterised in that following the sulphur separation the scrubbing agent is conducted to a $C_{3+}$ recovery stage.

**Revendications**

1. Procédé d'épuration d'un agent de lavage chargé en $H_2S$ et/ou COS, dans lequel l'agent de lavage chargé est additionné d'un solvant à action oxydante, non-miscible avec l'agent de lavage, et le $H_2S$ dissous est converti en soufre élémentaire par la voie oxydante, caractérisé en ce qu'on utilise un agent de lavage à action physique, non-miscible à l'eau et un solvant aqueux.

2. Procédé d'épuration selon la revendication 1, caractérisé en ce qu'on utilise des composés hydrocarbonés en tant qu'agent de lavage.

3. Procédé d'épuration selon la revendication 2, caractérisé en ce qu'on utilise des composés hydrocarbonés cycliques en tant qu'agent de lavage.

4. Procédé d'épuration selon la revendication 3, caractérisé en ce qu'on utilise des composés hydrocarbonés contenant de l'azote et/ou de l'oxygène en tant qu'agent de lavage.

5. Procédé d'épuration selon l'une quelconque des revendications 1 à 4, caractérisé en ce qu'on utilise comme agent d'oxydation une solution aqueuse d'un composé de vanadium pentavalent alcalin et on utilise un solvant contenant un promoteur.

6. Procédé d'épuration selon la revendication 5, caractérisé en ce qu'on ajoute, en tant que promoteur, un composé organique azoté, tel qu'une amine, ou les composés qui se forment au cours du procédé de purification.

7. Procédé d'épuration selon la revendication 6, caractérisé en ce qu'on ajoute en tant que promoteur azoté un composé choisi dans le groupe comprenant: alkylamine, alkanolamine, hétérocycles azotés, acides aminés, acides sulfoaminés et acides thioaminés.

8. Procédé d'épuration selon la revendication 7, caractérisé en ce qu'on utilise, en tant qu'alkanolamine de la mono- di- ou tri-éthanolamine, de la diméthyléthanolamine, de la méthyldiéthanolamine ou du méthylaminoéthanol.

9. Procédé d'épuration selon l'une des revendications 7 ou 8, caractérisé en ce que le promoteur est ajouté en une concentration de 10 à 100 g/l, de préférence de 30 à 50 g/l.

10. Procédé d'épuration selon la revendication 1, caractérisé en ce que le soufre élémentaire est soutiré d'un récipient d'extraction sous forme solide.

11. Procédé d'épuration selon la revendication 10, caractérisé en ce que le soufre soutiré sous forme solide est transformé en soufre liquide.

12. Procédé d'épuration selon l'une quelconque des revendications 1 à 5, caractérisé en ce que l'agent de lavage est détendu, avant purification du gaz brut, à la pression du réacteur d'extraction.

13. Procédé d'épuration selon la revendication 12, caractérisé en ce que la fraction gazeuse obtenue lors de la détente et contenant $H_2S$ et/ou COS est envoyé vers un lavage d'$H_2S$ par oxydation, au cours duquel l'agent de lavage chargé ainsi obtenu est traité en même temps que la fraction liquide de l'étape d'extraction.

14. Procédé d'épuration selon la revendication 13, caractérisé en ce que la fraction gazeuse est soumise à une hydrogénation catalytique après le lavage de $H_2S$, pour convertir le COS encore présent en $H_2S$ et envoyer ce dernier vers un lavage de $H_2S$ par oxydation.

15. Procédé d'épuration selon l'une quelconque des revendications 1 à 14, caractérisé en ce que l'agent de lavage est envoyé, après séparation du soufre, vers une étape de récupération des $C^{3+}$.

EP 0 341 572 B1